# EUROPÄISCHE PATENTSCHRIFT

(11) **EP 4 672 082 B1**
(45) Veröffentlichungstag und Bekanntmachung des Hinweises auf die Patenterteilung: **29.07.2026**
(21) Anmeldenummer: 24184916.5
(22) Anmeldetag: 27.06.2024
(51) Int. Cl.: G06K 7/14

(54) **LESEN OPTISCHER CODES**
READING OPTICAL CODES
LECTURE DE CODE OPTIQUE

(43) Veröffentlichungstag der Anmeldung: 31.12.2025
(73) Patentinhaber: SICK AG, 79183 Waldkirch (DE)
(72) Erfinder: Schüler, Pascal, 79331 Teningen (DE); Zopf, Steffen, 79183 Waldkirch (DE)

(56) Entgegenhaltungen:
- EP-A1- 4 258 160
- EP-B1- 3 428 835
- UNIVERSAL POSTAL UNION: "Data definition and encoding standards", 31 December 2018 (2018-12-31), XP055946697, Retrieved from the Internet <URL:https://www.upu.int/UPU/media/upu/files/postalSolutions/programmesAndServices/standards/S10-12.pdf> [retrieved on 20220727]

## Beschreibung

Die Erfindung betrifft ein Verfahren zum Lesen optischer Codes nach dem Oberbegriff von Anspruch 1 sowie einen entsprechenden optoelektronischen Codeleser.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation.

In einer wichtigen Anwendungsgruppe werden die codetragenden Objekte an dem Codeleser vorbei gefördert. Ein scannender Codeleser erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen. Auch ein scannender Codeleser erfasst die Remission und damit letztlich Bildzeilen, die zu einem Objektbild zusammengefügt werden können, auch wenn hierfür in der Praxis ein Bildsensor vorgezogen wird. In einem solchen Objektbild können Codebereiche identifiziert und ein- oder zweidimensionale Codes ausgelesen werden.

Für einen Codeleser oder einen Lesetunnel stellt eine hohe Leserate eines der wichtigsten Qualitätskriterien dar. Lesefehler zwingen zu aufwändigen Fehlerbehebungen, wie dem erneuten manuellen Abscannen oder einer Nachsortierung. Die Ursache für solche Fehler kann in der Qualität des Codes selbst liegen, in einer ungünstigen Lesesituation beispielsweise mit einem Code unter einer Folie, die Reflektionen verursacht, und schließlich auch in Auswertungsfehlern etwa im Zuge einer Binarisierung von Grauwerten oder in Form von ungenau berechneten Abtastpositionen.

In der EP 3 428 835 B1 wird ein Verfahren zum Lesen eines optischen Codes vorgestellt, bei dem in einer Vorkorrektur an mindestens einer Position des Codes ein Codewort durch ein für diese Position bekanntes Codewort ersetzt wird. Die bekannten Codewörter sind parametriert, von einer Datenbank eines übergeordneten Systems vorgegeben oder aus einer Historie von gelesenen Codes eingelernt.

Die EP 4 258 160 A1 erweitert diesen Gedanken und führt sogenannte Schemata ein. In einem Schema sind Erwartungen an häufig vorkommende Codekonstellationen formalisiert, beispielsweise als reguläre Ausdrücke. Dabei gibt es einen Fixanteil analog EP 3 428 835 B, der einer in vielen Codes wiederkehrenden festen Abfolge von Zeichen entspricht, sowie einen variablen Anteil, der allgemeinere Regeln erfasst, wie dass an bestimmten Positionen nur Ziffern oder nur Buchstaben vorkommen. Schemata können verwendet werden, um eine aus einem optischen Code gelesene Botschaft als falsch gelesen zu erkennen oder sie zu korrigieren.

Voraussetzung für eine solche Korrektur ist eine Liste von Schemata insbesondere in Form von regulären Ausdrücken, die zu den häufig in einer Anwendung vorkommenden optischen Codes passt. In der Praxis stellt sich das als große Hürde heraus. Das Erstellen der Liste erfordert nicht nur erheblichen Aufwand, sondern ist zudem fehleranfällig, weil der Einrichter in der Regel wenig Verständnis für die Syntax von regulären Ausdrücken mitbringt und die häufig vorkommenden optischen Codes auch nicht kennt und nur mühsam mit Hilfe von Logfiles oder dergleichen herausfinden könnte. Die Folge ist, dass die Liste unvollständig bleibt und so Potential für Korrekturen verschenkt wird oder sogar fehlerhafte Schemata verwendet werden, die noch künstlich zusätzliche Lesefehler erzeugen.

Daher ist Aufgabe der Erfindung, ein noch verlässlicheres und robusteres Verfahren zum Lesen von optischen Codes anzugeben.

Diese Aufgabe wird durch ein Verfahren zum Lesen optischer Codes nach Anspruch 1 sowie einen entsprechenden optoelektronischen Codeleser nach Anspruch 14 gelöst. Der optische Code enthält eine Botschaft, das ist derjenige Klartext, der durch den optischen Code vermittelt werden soll und darin codiert ist. Die Botschaft weist eine Zeichenkette mit einer Vielzahl von Zeichen auf. Sie enthält vorzugsweise neben den Nutzzeichen auch mindestens ein Prüfzeichen, beispielsweise eine Prüfsumme (Checksumme). Um den Code und damit die Botschaft zu lesen, werden zunächst auf einem der bekannten und einleitend beschriebenen Wege Bilddaten mit dem optischen Code aufgenommen. In den Bilddaten werden dann vorzugsweise durch eine Vorverarbeitung Codebereiche aufgefunden, welche die Bilddaten beispielsweise anhand des Kontrasts segmentiert, und der jeweilige Code in den Codebereichen wird decodiert und dadurch die Botschaft gelesen.

Die gelesenen Zeichen der Botschaft werden mit mindestens einem Schema verglichen. Das Schema erwartet an mehreren Positionen der Botschaft ein bestimmtes Zeichen. Durch Vergleich der gelesenen Zeichen der Botschaft an diesen Positionen mit den Zeichen des Schemas wird festgestellt, ob das Schema zu der Botschaft passt. Dazu muss insbesondere für einen Mindestanteil der durch das Schema erwarteten Zeichen eine Übereinstimmung mit den gelesenen Zeichen der Botschaft vorliegen, beispielsweise für mindestens zwei, mindestens drei, mindestens vier oder noch mehr Zeichen oder für einen Mindestanteil der aus dem Schema erwarteten Zeichen wie mindestens ein Drittel oder mindestens die Hälfte. Ist das der Fall, so erfolgt eine Prüfung oder Korrektur der Botschaft aus dem Schema, insbesondere werden für eine Prüfung anhand des Schemas zusätzliche Tests der Botschaft durchgeführt oder Informationen über Code und Botschaft abgeleitet und/oder für eine Korrektur Zeichen des Schemas in die gelesene Botschaft übernommen, vorzugsweise alle durch das Schema erwarteten Zeichen. Eine Korrektur mit den Schemata erfolgt vorzugsweise dann nicht, wenn der optische Code ohnehin fehlerfrei gelesen werden konnte (GoodRead), denn das Ziel der Korrektur ist, einen Lesefehler nach Möglichkeit doch noch zu vermeiden, das ist nicht nötig, wenn es gar keinen Lesefehler gab. Bis hierhin ist das Verfahren angelehnt an die EP 3 428 835 B1 und die EP 4 258 160 A1, auf die ergänzend für weitere Details und mögliche Ausgestaltungen verwiesen wird.

Die Erfindung geht von dem Grundgedanken aus, dass die für Vergleich und Korrektur verwendeten Schemata aus einem Pool oder Katalog vorgefertigter Schemata ausgewählt sind. Die Schemata in dem Katalog können übergeordnetes Wissen verwenden, von Experten erstellt und getestet sein, und sie sind deshalb besser adaptiert und verlässlicher als im Feld von einem Einrichter konfigurierte oder automatisch erfasste Schemata. Es sind in einer jeweiligen Codeleseanwendung bestimmte Schemata des Katalogs freigeschaltet oder aktiviert. Somit kommt eine Untermenge des Katalogs zum tatsächlichen Einsatz, wobei eine Untermenge wie üblich eine oder einige Schemata des Katalogs umfassen kann. Die Grenzfälle, dass gar kein Schema und/oder alle Schemata aktiviert sind, können ausgeschlossen werden, aber das Vorgehen ist auch in diesen Grenzfällen anders als bisher, weil der Grenzfall dann gezielt konfiguriert worden ist und es auch diese Möglichkeit bisher nicht gab.

Vorsorglich sei klargestellt, dass es sich um ein automatisch ablaufendes, insbesondere computerimplementiertes Verfahren handelt. Die Erstellung des Katalogs von Schemata ist dabei nicht Teil des erfindungsgemäßen Verfahrens, das vielmehr einen solchen Katalog als gegeben oder vorgefertigt voraussetzt. Um den Katalog vorab zu füllen, kann eine beliebige Mischung von händischen und computergestützten Schritten durchgeführt werden, beispielsweise Vorschläge eines automatischen Verfahrens, die ein Experte annimmt oder überarbeitet, umgekehrt Schemata eines Experten, die ein Computer vervollständigt und dergleichen.

Die Erfindung hat den Vorteil, dass zur Codelesesituation oder Anwendung passende Schemata zum Einsatz kommen. Für alle Schemata des Katalogs lässt sich vorab, beispielsweise ab Werk oder durch Experten, die Korrektheit ebenso sicherstellen wie, dass für die häufig vorkommenden optischen Codes auch relevante Schemata vorhanden sind. Falsche Schemata, die Lesefehler erst erzeugen, können von Anfang an ausgeschlossen werden. Durch die Aktivierung kommen aus dem qualitativ hochwertigen Katalog auch genau die Schemata zum Einsatz, die für die zu lesenden Codes gebraucht werden. Spezialwissen oder auch nur Zeitaufwand bei der Inbetriebnahme sind nicht mehr erforderlich. Bei Bedarf können dem Katalog neue Schemata hinzugefügt werden, um das Spektrum möglicher Anwendungen zu erweitern.

Ein Schema kann einen Fixanteil mit mindestens einem fixen Zeichen und/oder einen variablen Anteil mit mindestens einem variablen Zeichen aufweisen. Die hier und nachfolgend beschriebenen möglichen Eigenschaften beziehen sich auf mindestens ein Schema oder mehrere Schemata bis hin zu allen Schemata des Katalogs. Bei einem fixen Zeichen ist bekannt, welches Zeichen an der zugehörigen Position der Botschaft stehen soll. Ein variables Zeichen andererseits ist nicht auf ein fixes Zeichen festgelegt und kann in einem Teilbereich der insgesamt möglichen Zeichen variieren. Typische Beispiele für ein variables Zeichen sind Ziffern oder Buchstaben. Ein Schema passt also beispielsweise nicht in einem variablen Zeichen, das einen Buchstaben erwartet, aber eine Ziffer vorfindet. Gemäß ihrer Definition schließen fixe Zeichen und variable Zeichen einander aus.

Ein Schema weist bevorzugt eine Codelänge auf und/oder enthält für jede Position ein fixes Zeichen oder ein variables Zeichen. Zu dem Schema gehört somit die Information der Codelänge, der Gesamtzahl an Zeichen der Botschaft. Das Schema ist vorzugsweise vollständig, für jede Position der Botschaft ist also aus dem Schema bekannt, welches fixe Zeichen dort steht beziehungsweise welcher Teilbereich möglicher Zeichen dort als variables Zeichen möglich ist. In dieser Vollständigkeit steckt implizit die Codelänge oder ein Codelängenintervall, die aber dennoch zusätzlich explizite Parameter des Schemas sein können. Ein Schema kann auch unvollständig sein, es gibt dann mindestens ein völlig freies Zeichen in den Grenzen der grundsätzlichen Codespezifikation. Das kann insbesondere ein vorübergehender Zustand während eines Einlernens eines Schemas sein.

Ein Schema weist bevorzugt mindestens einen der folgenden Teilbereiche der möglichen Zeichen eines variablen Zeichens auf: nicht druckbare Zeichen, Sonderzeichen, Ziffern, Buchstaben, Kleinbuchstaben, Großbuchstaben. Das sind besonders geeignete Beispiele für Unterteilungen oder Klassen der in einer Botschaft denkbaren Zeichen. Im Prinzip könnte die Unterteilung ganz willkürlich erfolgen. Derartige semantische Klassen erleichtern aber dem Benutzer das Verständnis, so dass die Anwendung leichter diagnostiziert und optimiert werden kann. Zudem sind Regelmäßigkeiten in Codes in der Praxis ebenfalls eher in Form semantischer Klassen als beliebige Unterteilungen zu finden. Häufig sind die möglichen Zeichen eines Codes durch die Zahlen 0..127 des ASCII-Codes repräsentiert. Die genannten Teilbereiche können im ASCII-Code wiedergefunden werden.

Ein Schema wird bevorzug als regulärer Ausdruck formuliert, der für die jeweiligen Positionen die zulässigen Zeichen angibt. Ein regulärer Ausdruck erleichtert es dem Benutzer, das Schema zu verstehen und gegebenenfalls zu editieren. Zugleich wird die interne Verarbeitung erleichtert und die Fehleranfälligkeit beim Programmieren der Decoder verringert. Alternativ ist eine proprietäre Definition von Schemata vorstellbar, die aber vorzugsweise die Übersichtlichkeit und formale Regelmäßigkeit regulärer Ausdrücke zumindest annähernd erreicht.

Die Schemata der Untermenge werden bevorzugt in einer Einlernphase aktiviert. Diese Einlernphase liegt vor dem eigentlichen Betrieb, oder die Codeleseanwendung arbeitet eine Zeitlang während der Einlernphase noch ohne Schemata. Die Länge der Einlernphase kann parametrierbar sein. Hier ist zwischen der Wartezeit bis zur Aktivierung der passenden Schemata und der Güte der Passung zwischen den aktivierten Schemata und der Anwendung abzuwägen.

Dann, wenn eine Botschaft eines optischen Codes gelesen werden konnte, erfolgt bevorzugt ein Vergleich der gelesenen Zeichen der Botschaft mit den Schemata des Katalogs, um festzustellen, welches Schema zu der gelesenen Botschaft passt, und aus den passenden Botschaften eine Statistik aufgebaut wird, insbesondere ein Histogramm, das die Häufigkeiten der passenden Botschaften sammelt. Es werden somit in der Einlernphase die Schemata des Katalogs auf eine gelesene Botschaft angewandt, unabhängig von einer zu diesem Zeitpunkt erst noch ausstehenden Aktivierung. Es geht noch nicht darum, die Botschaft zu korrigieren. Das wäre gar nicht sinnvoll, weil vorerst selektiv nur gelesene Botschaften (GoodReads) mit den Schemata ausgewertet werden. Es geht darum, Informationen zu sammeln, welche optischen Codes in der aktuellen Anwendungssituation wie häufig vorkommen und welche Schemata demnach relevant sein könnten. Diese Informationen werden in einer Statistik gesammelt, sei es zunächst einfach als Datensätze wie (Zeitpunkt; Botschaft; passendes Schema) oder beispielsweise summarisch in einem Histogramm, dessen Bins den Schemata des Katalogs entsprechen und die bei jeder Passung eines betroffenen Schemas auf einen gelesenen Code heraufgezählt werden.

Zum Abschluss der Einlernphase wird die Statistik bevorzugt ausgewertet, um die Untermenge der zu aktivierenden Schemata zu bestimmen, insbesondere als diejenigen Schemata, die während der Einlernphase mit einer geforderten relativen oder absoluten Häufigkeit als passend erfasst worden sind. Die Einlernphase ist abgeschlossen, wenn ein Kriterium wie eine gesamte Dauer, eine Anzahl von erfassten Codes insgesamt, eine Anzahl von erfolgreichen Codelesungen (GoodReads) oder ein vergleichbares Maß eine möglicherweise parametrierbare Vorgabe erreicht. Diejenigen Schemata, die gemäß der Statistik ausreichend häufig gepasst haben, werden aktiviert, die übrigen Schemata werden oder bleiben deaktiviert. Die Häufigkeit kann absolut oder relativ gemessen werden.

Nach der Einlernphase wird bevorzugt weiterhin geprüft, welches Schema zu einer jeweiligen gelesenen Botschaft passt, um die Statistik fortzusetzen oder eine weitere Statistik zu erzeugen, wobei nach Auswertung der fortgesetzten oder weiteren Statistik mindestens ein Schema nachaktiviert und/oder mindestens ein Schema deaktiviert wird. In dieser Ausführungsform erfolgt nach Abschluss der Einlernphase parallel weiterhin eine der Einlernphase analoge Auswertung, welche Schemata des Katalogs am besten auf die aktuelle Anwendungssituation passen. Dadurch kann auf Veränderungen wie beispielsweise einen Chargenwechsel reagiert werden. Schemata, die nicht mehr passen, werden dann deaktiviert beziehungsweise neu passende Schemata nun aktiviert. Um die Statistiken der Einlernphase und der späteren Phasen unterscheiden zu können, ist denkbar, unterschiedliche Statistiken beziehungsweise mehrere Histogramme zu erfassen. Alternativ können Datensätze wie (Zeitpunkt; Botschaft; passendes Schema) nach ihrem Zeitstempel zugeordnet werden und je nach Alter mehr oder weniger Gewicht haben, bis dahin, dass ab einem gewissen Alter die Datensätze verworfen werden. Eine weitere Alternative ist eine Art gleitender Mittelwert der Anzahl Passungen je Schema über die Zeit, der ebenfalls zu einem Vergessen führt.

Während der Einlernphase und/oder nach der Einlernphase wird bevorzugt eine Nichtpassungsanzahl erfasst, wie oft auf eine Botschaft eines gelesenen Codes kein Schema des Katalogs passt. Das ist natürlich nicht nützlich in Bezug auf eine Aktivierung von Schemata, da es für diese Fälle ja gerade kein passendes Schema gibt. Die Anzahl Codes, auf die gar kein Schema passt, kann dennoch eine hilfreiche Information sein, beispielsweise für die Bestimmung relativer Häufigkeiten. Sie kann als ein weiteres Bin eines Histogramms geführt werden.

Es werden bevorzugt sämtliche Schemata deaktiviert, wenn die Nichtpassungsanzahl eine Mindesthäufigkeit überschreitet. Dies ist eine weitere mögliche Folgerung aus der Anzahl Codes, zu denen kein Schema passt. Wenn das zu oft vorkommt, dann wird in dieser Ausführungsform daraus gefolgert, dass der ganze Katalog von Schemata nicht gut für die gegebene Anwendungssituation geeignet ist. Von der Anwendung der Schemata wird dann mehr Schaden als Nutzen erwartet und der Vergleich und die Korrektur mit Schemata ganz abgeschaltet. Dies kann mit einer Nachricht an den Anwender verbunden sein, einfach als Information oder beispielsweise mit dem Ziel, den Katalog auszutauschen oder nachzubessern. Die Mindesthäufigkeit kann wiederum absolut oder relativ vorgegeben sein.

Mindestens ein Schema, wenn es als zu der Botschaft passend erkannt wird, löst bevorzugt eine Zusatzfunktion aus. Über das Schema können auch bestimmte Typen von Codes erkannt werden, die möglicherweise sehr individuelle Eigenschaften haben oder Zusatzinformationen tragen. Die Passung eines Schemas kann dann eine Zusatzfunktion auslösen, um diesen Eigenschaften gerecht zu werden oder die Eigenschaften weiter zu nutzen. Solche Zusatzfunktionen können als Regeln oder Programmmodule an ein Schema gebunden und dann automatisch ausgelöst werden, wenn das Schema zu einem aktuell gelesenen Code passt.

Die Zusatzfunktion weist bevorzugt eine Texterkennung auf, die einen dem optischen Code zugeordneten Text liest, insbesondere eine Prüfziffer, die nur im Klartext, nicht aber als Teil der im optischen Code codierten Botschaft in den Bilddaten enthalten ist. Das Schema gehört in diesem Fall zu einer Familie von Codes, die üblicherweise gemeinsam mit einem Klartext gedruckt werden, wobei der Klartext Informationen enthält, die über die codierte Botschaft hinausgehen. Ein Beispiel ist eine in Klartext aufgedruckte zusätzliche Prüfziffer. Die Zusatzfunktion ist hier eine Texterkennung (OCR), mit der ein zusätzlicher Klartext erfasst werden kann. Der Klartext kann dann schlicht mit ausgegeben werden. Im Falle einer Prüfziffer kann die Zusatzfunktion auch einen zugehörigen weiteren Konsistenzcheck durchführen.

Die Zusatzfunktion weist bevorzugt eine Ländercodeerkennung auf, insbesondere mit Vorschlag eines passenden Ländercodes an einen Benutzer. Ländercodes sind in einem Schema als variable Zeichen oder Buchstaben unzureichend definiert, weil längst nicht alle Buchstabentupel einem zulässigen Ländercode entsprechen. Die Zusatzfunktion kann daher einen genaueren Abgleich beispielsweise mit einer Ländertabelle durchführen. Bei einem unvollständig gelesenen Ländercode können zwischen mehreren denkbaren Ergänzungen zu einem zulässigen Ländercode weitere Heuristiken hinzukommen. So ist wahrscheinlicher, dass ein Nachbarland codiert war als ein fernes Land, oder ein wichtiger Handelspartner ist wahrscheinlicher als ein wirtschaftlich unbedeutender Zwergstaat.

Der erfindungsgemäße optoelektronische Codeleser weist ein Lichtempfangselement zur Erzeugung von Bilddaten aus Empfangslicht und somit zur Aufnahme eines Bildes auf. Der Lichtempfänger kann derjenige eines Barcodescanners sein, beispielsweise eine Photodiode, und die Intensitätsprofile der Scans werden zeilenweise zu dem Bild zusammengesetzt. Vorzugsweise handelt es sich um einen Bildsensor eines kamerabasierten Codelesers. Der Bildsensor wiederum kann ein Zeilensensor zur Erfassung einer Codezeile oder eines flächigen Codebildes durch Zusammensetzen von Bildzeilen oder ein Matrixsensor sein, wobei auch Aufnahmen eines Matrixsensors zu einem größeren Bild zusammengefügt sein können. Ein Verbund mehrerer Codeleser oder Kameraköpfe ist ebenfalls denkbar. In einer Steuer- und Auswertungseinheit, die selbst Teil eines Barcodescanners oder eines kamerabasierten Codelesers oder als Steuerungsgerät daran angeschlossen sein kann, ist ein erfindungsgemäßes Verfahren zum Lesen optischer Codes gemäß einer der Ausführungsformen implementiert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines Codelesers, der beispielhaft über einem Förderband montiert ist, auf dem Objekte mit zu lesenden optischen Codes gefördert werden;
- Fig. 2: einige beispielhafte Schemata;
- Fig. 3: ein beispielhaftes Ablaufdiagramm für eine Einlernphase, in der eine Statistik über zu den zu lesenden Codes passende Schemata erzeugt wird; und
- Fig. 4: ein beispielhaftes Histogramm als Ergebnis der Einlernphase, das ausgewertet wird, um die passenden und zu aktivierenden Schemata für das weitere Codelesen zu aktivieren.

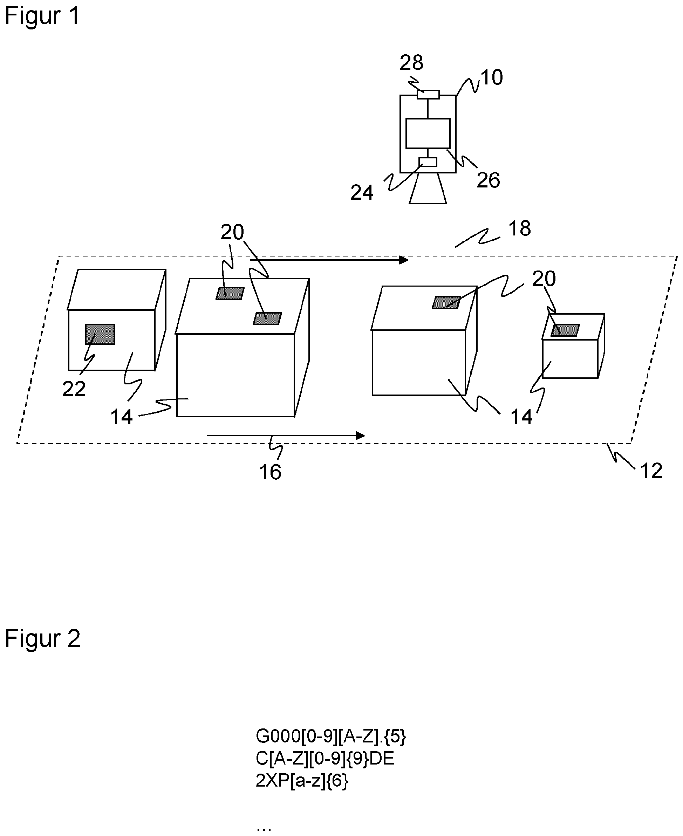

Figur 1 zeigt einen optoelektronischen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber auf das Lesen von Codes beziehungsweise den Codeleser 10 selbst, so dass dieses Beispiel nicht einschränkend verstanden werden darf. Beispielsweise können Codes auch von Hand abgescannt, oder es kann in einer Präsentationsanwendung ein Code oder ein Objekt 14 mit einem Code in das Lesefeld des Codelesers 10 gehalten werden.

Der Codeleser 10 erfasst mit einem Lichtempfänger 24 Bilddaten der geförderten Objekte 14 und der Codebereiche 20, die von einer Steuer- und Auswertungseinheit 26 mittels Bildauswertung und Decodierverfahren weiterverarbeitet werden. Die Steuer-und Auswertungseinheit 26 umfasst beispielsweise mindestens einen Rechenbaustein wie einen Mikroprozessor oder eine CPU (Central Processing Unit), ein FPGA (Field Programmable Gate Array), einen DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Es kommt ferner für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, und die Steuer- und Auswertungseinheit fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die zentrale Funktion des Codelesers 10 ist das Decodieren, d.h. das Lesen der in einem optischen Code codierten Botschaft als Klartext. Die Botschaft ist eine Zeichenkette aus Nutzzeichen vorzugsweise mit mindestens einem Prüfzeichen, das typischerweise am Ende steht. Über eine Schnittstelle 28 gibt der Codeleser 10 Informationen aus, wie aus den Codes gelesene Botschaften oder Bilddaten.

Nachstehend wird unter Bezugnahme auf die Figuren 2 bis 4 eine Korrektur der jeweils aus einem Code gelesenen Botschaft mittels Schemata erläutert. Vorzugsweise erfolgt dies in der Steuer- und Auswertungseinheit 26. Ebenso ist aber denkbar, Bilddaten oder Zwischenergebnisse über die Schnittstelle 28 auszugeben und zumindest einen Teil der Decodierung und/oder Korrektur in ein übergeordnetes System auszulagern, wie einen Steuerungsrechner, ein Netzwerk oder eine Cloud. Vorverarbeitungen der Bilddaten zur Segmentierung und zum Auffinden von Codebereichen 20 sowie die Decodierung an sich werden als bekannt vorausgesetzt und nicht beschrieben.

Figur 2 zeigt einige beispielhafte Schemata, die zur Korrektur einer aus einem optischen Code 20 gelesenen Botschaft verwendet werden können. Sie sind hier als reguläre Ausdrücke formuliert. Gemäß der hier den Schemata zugrundeliegenden Konvention werden von dem ersten Schema als die ersten vier fixen Zeichen "G000" erwartet. Darauf folgen zwei variable Zeichen, nämlich eine Ziffer und ein Großbuchstabe, und dann noch fünf über den Punkt symbolisierte beliebige Zeichen. Entsprechend fordert das zweite Schema zunächst fix den Großbuchstaben C, dann einen beliebigen Großbuchstaben, neun Ziffern und abschließend die fixen Großbuchstaben DE. Das dritte Schema beginnt mit den fixen Zeichen 2XP gefolgt von sechs Kleinbuchstaben. Weitere denkbare Schemata umfassen einen Fixanteil mit mehr oder weniger Zeichen, zusammenhängend oder verteilt am Anfang, Ende oder mitten in dem Schema sowie keinen oder einen anderen variablen Anteil und sonstige Variationen. Die syntaktische Konvention ist ebenfalls rein beispielhaft, die Vorgaben an Fixanteil und/oder variablen Anteil können auf beliebige Weise notiert werden. Zu den möglichen Ausgestaltungen eines Schemas und dessen Anwendung auf einen Code wird nochmals ergänzend auf die EP 4 258 160 A1 verwiesen.

Als Ausgangspunkt für das nun zu erläuternde Verfahren stehen eine Vielzahl der beispielhaft gezeigten Schemata in einem Katalog zur Verfügung. Wie diese Schemata des Katalogs gewonnen werden, ist nicht Gegenstand dieser Erfindung. Sie können händisch aus allgemeinen Überlegungen, Codespezifikationen oder Logfiles von Codelesern gewonnen werden, oder dies erfolgt zumindest unterstützend oder vollautomatisch anhand von Computerauswertungen von Historien von gelesenen Codes, in denen Regelmäßigkeiten erkannt werden. Die Schemata des Katalogs können verifiziert und getestet werden, so dass sie zumindest syntaktisch stimmig sind und nach Möglichkeit einen Pool für im Feld relevante Codes bilden. Es können verschiedene Kataloge für verschieden typische Anwendungsszenarien gebildet werden. Um die Schemata zuordnen zu können, ist jedem Schema vorzugsweise eine Identifikation zugeordnet, wie eine eindeutige Zahl oder ein Name.

Ein großer Vorteil von vordefinierten Schemata des Katalogs ist, neben der durch einen Experten garantierten korrekten Syntax, dass hier übergeordnetes Wissen einfließen kann, das sich durch automatisierte Verfahren gar nicht oder erst nach sehr vielen Beispielen erschließen ließe. Ein erstes Beispiel sind Postleitzahlen als Teil der Botschaft. Dies sind nicht lediglich fünf Ziffern, es gibt noch die übergeordnete und vorgegebene Bedingung, dass der Wertebereich auf 01001-99999 eingeschränkt ist. Ein zweites Beispiel ist eine Gewichtscodierung etwa im Wertebereich von 001-300, wobei jedes Inkrement einem 0,1kg-Schritt entspricht.

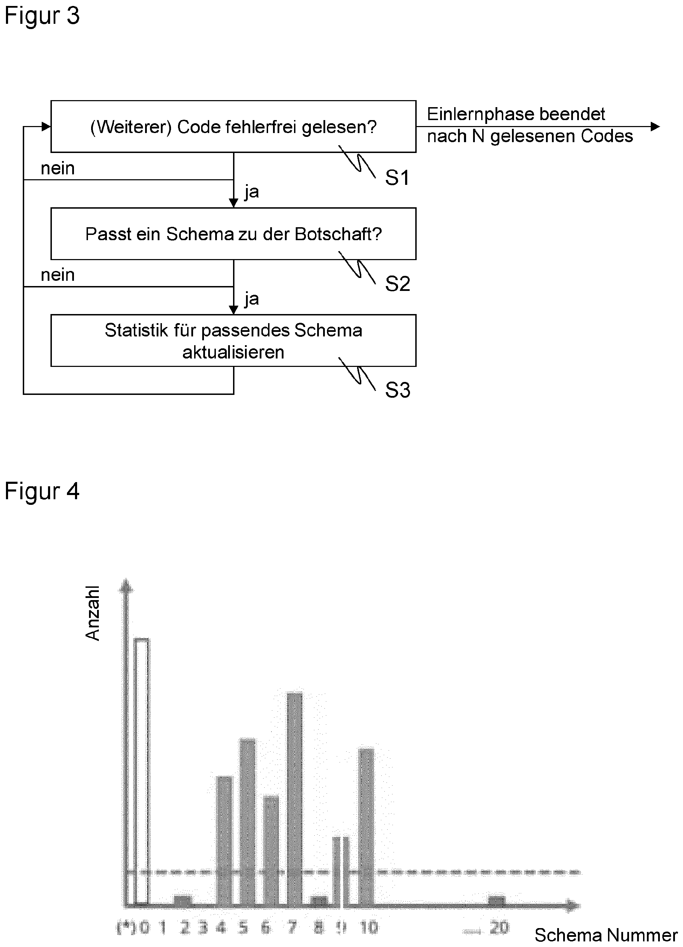

Figur 3 zeigt ein beispielhaftes Ablaufdiagramm für eine Einlernphase, in der eine Statistik über zu den zu lesenden Codes passende Schemata erzeugt wird. Während der Einlernphase werden beispielsweise wie in Figur 1 Objekte 14 mit Codes 20 präsentiert und die Codes 20 gelesen. Die Einlernphase kann einem eigentlichen Betrieb vorgeschaltet sein, oder es wird einfach eine Weile im Betrieb noch ohne Schemata gearbeitet, bis die Einlernphase abgeschlossen ist.

In einem Schritt S1 wird abgefragt, ob der jeweilige nächste Code 20 fehlerfrei gelesen werden konnte. Wenn das nicht der Fall ist, trägt dieser Code 20 zum Einlernen nicht bei, und das Verfahren kehrt zu Schritt S1 zurück. Mit Schemata korrigiert werden kann zu diesem Zeitpunkt noch nicht, weil noch keine Schemata des Katalogs aktiviert sind.

In einem Schritt S2 wird geprüft, ob ein Schema des Katalogs zu der aus dem Code 20 gelesenen Botschaft passt. Findet sich hier kein Schema, kehrt das Verfahren wiederum zu Schritt S1 zurück, allenfalls wird noch ein Zähler für Codes 20 inkrementiert, zu denen kein Schema des Katalogs passt.

In einem Schritt S3 wird die Statistik über passende Schemata aktualisiert. Statistik bedeutet, dass hieraus statistische Aussagen über die Häufigkeit der passenden Schemata abgeleitet werden können. Aktualisiert bedeutet demnach, dass die Statistik die bisherigen Häufigkeiten der passenden Schemata abbildet. Ein im Folgenden herangezogenes Beispiel dafür ist ein Histogramm, das für jedes Schema des Katalogs ein Bin aufweist. In dem Schritt S3 wird dann dasjenige Bin heraufgezählt, das zu dem passenden Schema gehört. Es werden ganz entsprechend mehrere Bins heraufgezählt, falls im Schritt S2 mehrere passende Schemata gefunden werden.

Das Verfahren kehrt dann wieder zu dem Schritt S1 zurück. Die Einlernphase ist beendet, wenn eine vorgegebene Anzahl N von Codes 22 gelesen werden konnte, alternativ wenn N Codes 22 ausgewertet wurden, unabhängig vom Leseerfolg, oder wenn eine vorgegebene Dauer abgelaufen ist, wobei diese alternativen Bedingungen nicht gleichwertig die Breite der Statistik garantieren. Statt ein Histogramm zu bilden, können auch mehrere Histogramme erzeugt werden, um Zeitphasen zu unterscheiden und dann beispielsweise aktuellere Daten höher zu gewichten, oder eine Art gleitender Mittelwert gebildet werden. Es können auch zunächst einfach Datenpunkte gesammelt werden, insbesondere mit Zeitstempel, welche passenden Schemata gefunden wurden, um dies später bei der Auswertung zu einer Statistik zusammenzufassen.

Figur 4 zeigt ein beispielhaftes Histogramm als Ergebnis der Einlernphase, das ausgewertet wird, um die passenden und zu aktivierenden Schemata für das weitere Codelesen zu aktivieren. Mit gestrichelter Linie ist eine Häufigkeitsschwelle eingezeichnet, die diejenigen Bins und damit Schemata herausfiltert, die während der Einlernphase oft genug gepasst haben, um sie nun zu aktivieren. Es kann alternativ ein anderes Maß verwendet werden, wie eine relative Häufigkeitsschwelle.

Die aus dem Histogramm oder allgemein der Statistik als hinreichend häufig aufgetreten erkannten Schemata werden nun für den weiteren Betrieb aktiviert. Wenn jetzt ein Code 20 nicht gelesen werden kann, wird die teilweise gelesene Botschaft mit den aktivierten Schemata verglichen und dann, soweit ein Schema gefunden wurde, anhand des Schemas korrigiert. Ein gelesener Code kann anhand des Schemas zusätzlichen Prüfungen unterzogen werden, oder es können aus dem Schema weitere Informationen über Code und/oder Botschaft abgeleitet werden. Hier wird nochmals auf die EP 3 428 835 B1 und die EP 4 258 160 A1 verwiesen.

Es ist denkbar, während des Betriebs mit aktivierten Schemata im Hintergrund analog der Einlernphase weiterhin eine Statistik zu führen oder neu aufzubauen, welche Schemata des Katalogs, d.h. der aktivierten wie der nicht aktivierten Schemata, auf die gelesenen Codes 20 passen. Sind dabei genug Fälle zusammengekommen, beispielsweise nochmals N gelesene Codes analog der Einlernphase, so kann erneut wie in Figur 4 ausgewertet werden, um Schemata nachzuaktivieren, die nun häufig genug zugeordnet werden konnten, oder jene Schemata zu deaktivieren, die nicht mehr so häufig auftreten. Dadurch ist eine Anpassung an wechselnde Anwendungsbedingungen ermöglicht.

In Figur 4 findet sich ein optionales nulltes Bin, das keinem Schema zugeordnet ist, sondern gezählt hat, wie oft zu einem gelesenen Code 20 keines der Schemata des Katalogs gepasst hat. Dieses nullte Bin wird oft die größte Anzahl aufweisen, durchaus auch noch drastischer als in Figur 4. Es handelt sich zunächst einfach um eine vervollständigende Zusatzinformation. Denkbar ist aber auch, die Anzahl in dem nullten Bin als Kriterium heranzuziehen, ob überhaupt Schemata des geltenden Katalogs aktiviert werden sollten. Überschreitet diese Anzahl eine gewisse Häufigkeit, beispielsweise 90% der insgesamt in dem Histogramm berücksichtigten Codes, so muss davon ausgegangen werden, dass der Katalog für die Anwendungssituation nicht gut geeignet ist, mit dem Ergebnis, dass sämtliche Schemata deaktiviert werden beziehungsweise die darauf basierende Prüfungs- und Korrekturfunktionalität insgesamt abgeschaltet wird oder bleibt.

Als eine weitere Option können Schemata noch eine Zusatzfunktion definieren. Wird dann im Betrieb ein Schema einem gelesenen Code zugeordnet, so kann neben den Prüfungen und Korrekturen auch die Zusatzfunktion des passenden Schemas ausgeführt werden. Ein Beispiel für eine Zusatzfunktion ist das Zuschalten besonderer Decodermodule, etwa einer Mustererkennung insbesondere auf bestimmte Abschnitte des Codes, oder einer Texterkennung, um einen mit dem Code verbundenen Text zu lesen. Ein anderes Beispiel ist eine besondere Prüfung, die sich nicht in reguläre Ausdrücke fassen lässt.

Als noch konkreteres Beispiel gibt es Codes, zu denen ein Klartext gedruckt ist, der über die Botschaft des Codes selbst hinausgeht und beispielsweise eine weitere Prüfziffer enthält. Wird ein solcher Code anhand einer Passung eines entsprechenden Schemas erkannt, so kann dessen Zusatzfunktion mittels Texterkennung die weitere Prüfziffer lesen. Mit der weiteren Prüfziffer kann dann die Botschaft nochmals verifiziert werden. Das ist dann besonders vorteilhaft, wenn eine Prüfziffer des Codes selbst bereits verwendet wurde, um einen Lesefehler zu korrigieren. Alternativ oder zusätzlich wird die weitere Prüfziffer als Zusatzinformation mit der Botschaft ausgegeben.

Ein weiteres Beispiel ist ein Ländercode und eine Zusatzfunktion, die diesen Ländercode prüft oder korrigiert. Grundsätzlich ist das eine Kombination zweier Großbuchstaben und als solche durch entsprechende variable Zeichen eines Schemas erkennbar. Es sind aber bei Weitem nicht alle Paare von Großbuchstaben ein Ländercode. Somit kann die Zusatzfunktion eines entsprechenden Schemas mit Ländercode eine Ländercodetabelle heranziehen, um einen Ländercode zu prüfen oder zu korrigieren. Es sind hier auch noch spezielle Heuristiken und Maßnahmen denkbar. Beispielsweise können Entfernungen zwischen dem Installationsort des Codelesers und dem vermuteten Ländercode und/oder aus Prioritäten der Länder aus Anwendungssicht herangezogen werden, etwa eine Häufigkeit, wie oft Länder in den bisher gelesenen Codes vorkamen. Die Vermutung der Zusatzfunktion fiele dann eher auf ein wichtiges Nachbarland als ein unwichtiges fernes Land. Als weitere Alternative ist denkbar, mit den noch in Frage kommenden Ländercodes ganz gezielt an deren Ort in den Bilddaten zurückzugehen und beispielsweise anhand eines Mustervergleichs den Ländercode doch noch zu erfassen. Da der Ländercode in einer Logistikanwendung hohe Bedeutung hat, wird das Ergebnis der Zusatzfunktion vorzugsweise nur vorgeschlagen und nicht automatisch korrigiert, damit eine händische Nachkontrolle ermöglicht ist, die grobe Zuordnungsfehler vermeidet.

## Patentansprüche

1. Verfahren zum Lesen eines optischen Codes (20), der eine Botschaft codiert, die eine Zeichenkette mit einer Vielzahl von Zeichen aufweist, mit den Schritten Aufnehmen von Bilddaten mit dem optischen Code (20),
Auswerten der Bilddaten mit Lesen der Botschaft,
Vergleichen der gelesenen Zeichen der Botschaft mit mindestens einem Schema, das für mindestens eine Position der Botschaft ein Zeichen enthält, das in zu lesenden Codes (20) an dieser Position erwartet wird, und
Prüfen oder Korrigieren der gelesenen Botschaft anhand eines nach dem Vergleich zu der Botschaft passenden Schemas,
**dadurch gekennzeichnet,**
**dass** ein vorgefertigter Katalog von Schemata vorgesehen ist und dass eine Untermenge der Schemata des Katalogs für das Vergleichen mit den gelesenen Zeichen der Botschaft aktiviert ist.

2. Verfahren nach Anspruch 1,
wobei das Schema eine Codelänge aufweist und/oder für jede Position ein fixes Zeichen oder ein variables Zeichen enthält.

3. Verfahren nach Anspruch 2,
wobei ein Schema mindestens einen der folgenden Teilbereiche der möglichen Zeichen eines variablen Zeichens aufweist: nicht druckbare Zeichen, Sonderzeichen, Ziffern, Buchstaben, Kleinbuchstaben, Großbuchstaben, insbesondere durch ASCII-Codes.

4. Verfahren nach einem der vorhergehenden Ansprüche,
wobei ein Schema als regulärer Ausdruck formuliert wird, der für die jeweiligen Positionen die zulässigen Zeichen angibt.

5. Verfahren nach einem der vorhergehenden Ansprüche,
wobei die Schemata der Untermenge in einer Einlernphase aktiviert werden.

6. Verfahren nach Anspruch 5,
wobei dann, wenn eine Botschaft eines optischen Codes (20) gelesen werden konnte, ein Vergleich der gelesenen Zeichen der Botschaft mit den Schemata des Katalogs erfolgt, um festzustellen, welches Schema zu der gelesenen Botschaft passt, und aus den passenden Botschaften eine Statistik aufgebaut wird, insbesondere ein Histogramm, das die Häufigkeiten der passenden Botschaften sammelt.

7. Verfahren nach Anspruch 6,
wobei zum Abschluss der Einlernphase die Statistik ausgewertet wird, um die Untermenge der zu aktivierenden Schemata zu bestimmen, insbesondere als diejenigen Schemata, die während der Einlernphase mit einer geforderten relativen oder absoluten Häufigkeit als passend erfasst worden sind.

8. Verfahren nach Anspruch 7,
wobei nach Abschluss der Einlernphase weiterhin geprüft wird, welches Schema zu einer jeweiligen gelesenen Botschaft passt, um die Statistik fortzusetzen oder eine weitere Statistik zu erzeugen, und wobei nach Auswertung der fortgesetzten oder weiteren Statistik mindestens ein Schema nachaktiviert und/oder mindestens ein Schema deaktiviert wird.

9. Verfahren nach einem der Ansprüche 5 bis 8,
wobei während der Einlernphase und/oder nach der Einlernphase eine Nichtpassungsanzahl erfasst wird, wie oft auf eine Botschaft eines gelesenen Codes (20) kein Schema des Katalogs passt.

10. Verfahren nach Anspruch 9,
wobei sämtliche Schemata deaktiviert werden, wenn die Nichtpassungsanzahl eine Mindesthäufigkeit überschreitet.

11. Verfahren nach einem der vorhergehenden Ansprüche,
wobei mindestens ein Schema, wenn es als zu der Botschaft passend erkannt wird, eine Zusatzfunktion auslöst.

12. Verfahren nach Anspruch 11,
wobei die Zusatzfunktion eine Texterkennung aufweist, die einen dem optischen Code (20) zugeordneten Text liest, insbesondere eine Prüfziffer, die nur im Klartext, nicht aber als Teil der im optischen Code (20) codierten Botschaft in den Bilddaten enthalten ist.

13. Verfahren nach Anspruch 11 oder 12,
wobei die Zusatzfunktion eine Ländercodeerkennung aufweist, insbesondere mit Vorschlag eines passenden Ländercodes an einen Benutzer.

14. Optoelektronischer Codeleser (10) mit mindestens einem Lichtempfangselement (24) zur Erzeugung von Bilddaten aus Empfangslicht und mit einer Steuer- und Auswertungseinheit (26), in der ein Verfahren zum Lesen von optischen Codes (20) nach einem der vorhergehenden Ansprüche implementiert ist.

## Claims

1. A method of reading an optical code (20) that encodes a message which has a character string having a plurality of characters, said method comprising the steps
recording image data having the optical code (20);
evaluating the image data by reading the message;
comparing the read characters of the message with at least one scheme which contains a character for at least one position of the message that is expected at this position in codes (20) to be read; and
checking or correcting the read message based on a scheme matching the message after the comparison,
**characterized in that**
a pre-assembled catalog of schemes is provided; and **in that** a subset of the schemes of the catalog is activated for the comparison with the read characters of the message.

2. A method according to claim 1,
wherein the scheme has a code length and/or contains a fixed character or a variable character for every position.

3. A method according to claim 2,
wherein a scheme has at least one of the following subranges of the possible characters of a variable character: non-printable characters, special characters, numerals, letters, lower case letters, upper case letters, in particular by ASCII codes.

4. A method according to any one of the preceding claims,
wherein a scheme is formulated as a regular expression which indicates the permitted characters for the respective positions.

5. A method according to any one of the preceding claims,
wherein the schemes of the subset are activated in a teaching phase.

6. A method according to claim 5,
wherein, when a message of an optical code (20) was able to be read, a comparison of the read characters of the message with the schemes of the catalog takes place to determine which scheme matches the read message and a statistic is built up from the matching messages, in particular a histogram which collects the frequencies of the matching messages.

7. A method according to claim 6,
wherein, at the end of the teaching phase, the statistic is evaluated to determine the subset of the schemes to be activated, in particular as those schemes which have been detected as matching during the teaching phase with a required relative or absolute frequency.

8. A method according to claim 7,
wherein, after completion of the teaching phase, a check is furthermore made of which scheme matches a respective read message to continue the statistic or to generate a further statistic; and wherein at least one scheme is subsequently activated and/or at least one scheme is deactivated after evaluation of the continued or further statistic.

9. A method according to any one of the claims 5 to 8,
wherein a non-match count of how often no scheme of the catalog matches a message of a read code (20) is detected during the teaching phase and/or after the teaching phase.

10. A method according to claim 9,
wherein all the schemes are deactivated when the non-match count exceeds a minimum frequency.

11. A method according to any one of the preceding claims,
wherein at least one scheme triggers an additional function if it is recognized as matching the message.

12. A method according to claim 11,
wherein the additional function has text recognition which reads a text associated with the optical code (20), in particular a check digit which is only included in clear text, but not as part of the message encoded in the optical code (20) in the image data.

13. A method according to claim 11 or claim 12,
wherein the additional function has a country code recognition, in particular with a proposal for a matching country code to a user.

14. An optoelectronic code reader (10) having at least one light reception element (24) for generating image data from received light and having a control and evaluation unit (26) in which a method of reading optical codes (20) according to any one of the preceding claims is implemented.

## Revendications

1. Procédé de lecture d'un code optique (20) codant un message comprenant une chaîne de caractères comportant une pluralité de caractères, comprenant les étapes suivantes
acquérir des données d'image contenant le code optique (20), évaluer les données d'image en lisant le message,
comparer les caractères lus du message avec au moins un schéma qui, pour au moins une position du message, contient un caractère attendu à cette position dans les codes (20) à lire, et
vérifier ou corriger le message lu sur la base d'un schéma correspondant au message après la comparaison,
**caractérisé en ce**
**qu'**un catalogue préétabli de schémas est prévu et qu'un sous-ensemble des schémas du catalogue est activé pour la comparaison avec les caractères lus du message.

2. Procédé selon la revendication 1,
dans lequel le schéma comporte une longueur de code et/ou contient, pour chaque position, un caractère fixe ou un caractère variable.

3. Procédé selon la revendication 2,
dans lequel un schéma comporte au moins l'un des sous-domaines suivants des caractères possibles d'un caractère variable : caractères non imprimables, caractères spéciaux, chiffres, lettres, lettres minuscules, lettres majuscules, notamment par des codes ASCII.

4. Procédé selon l'une des revendications précédentes,
dans lequel un schéma est formulé sous forme d'expression régulière qui spécifie les caractères autorisés pour les positions respectives.

5. Procédé selon l'une des revendications précédentes,
dans lequel les schémas du sous-ensemble sont activés lors d'une phase d'apprentissage.

6. Procédé selon la revendication 5,
dans lequel, lorsqu'un message d'un code optique (20) a pu être lu, une comparaison des caractères lus du message avec les schémas du catalogue est effectuée afin de déterminer quel schéma correspond au message lu, et une statistique est établie à partir des messages correspondants, en particulier un histogramme qui collecte les fréquences des messages correspondants.

7. Procédé selon la revendication 6,
dans lequel, à la fin de la phase d'apprentissage, la statistique est évaluée afin de déterminer le sous-ensemble des schémas à activer, en particulier les schémas qui ont été enregistrés comme correspondants pendant la phase d'apprentissage avec une fréquence relative ou absolue requise.

8. Procédé selon la revendication 7,
dans lequel, une fois la phase d'apprentissage terminée, on vérifie en outre quel schéma correspond à un message lu respectif, afin de poursuivre la statistique ou de générer une statistique supplémentaire, et dans lequel, après évaluation de la statistique poursuivie ou supplémentaire, au moins un schéma est activé ultérieurement et/ou au moins un schéma est désactivé.

9. Procédé selon l'une des revendications 5 à 8,
dans lequel, pendant la phase d'apprentissage et/ou après la phase d'apprentissage, un nombre de non-correspondances est enregistré, indiquant combien de fois aucun schéma du catalogue ne correspond à un message d'un code lu (20).

10. Procédé selon la revendication 9,
dans lequel tous les schémas sont désactivés lorsque le nombre de non-correspondances dépasse une fréquence minimale.

11. Procédé selon l'une des revendications précédentes,
dans lequel au moins un schéma, s'il est reconnu comme correspondant au message, déclenche une fonction supplémentaire.

12. Procédé selon la revendication 11,
dans lequel la fonction supplémentaire comporte une reconnaissance de texte qui lit un texte associé au code optique (20), en particulier un chiffre de contrôle qui est contenu dans les données d'image uniquement en texte clair, mais pas en tant que partie du message codé dans le code optique (20).

13. Procédé selon la revendication 11 ou 12,
dans lequel la fonction supplémentaire comporte une reconnaissance de code pays, en particulier avec proposition d'un code pays correspondant à un utilisateur.

14. Lecteur de codes optoélectronique (10) comprenant au moins un élément de réception de lumière (24) pour générer des données d'image à partir de la lumière reçue, et une unité de commande et d'évaluation (26) dans laquelle est mis en œuvre un procédé de lecture de codes optiques (20) selon l'une des revendications précédentes.
